# EUROPEAN PATENT SPECIFICATION

(11) **EP 3 997 763 B1**
(45) Date of publication and mention of the grant of the patent: **11.06.2025**
(21) Application number: 20836046.1
(22) Date of filing: 03.07.2020
(51) Int. Cl.: H01R 13/62, A41F 1/00, A44B 1/00, A44B 11/00, A44B 11/25, A44B 17/00, A45C 13/10, F16B 21/12, H04B 1/3888, H04M 1/18, H04M 1/72, A45C 11/00, F16B 21/16

(54) **PORTABLE ELECTRONIC DEVICE CASE**
GEHÄUSE FÜR TRAGBARE ELEKTRONISCHE VORRICHTUNG
BOÎTIER DE DISPOSITIF ÉLECTRONIQUE PORTABLE

(30) Priority: 10.07.2019 SE 1950876; 17.03.2020 SE 2050290
(43) Date of publication of application: 18.05.2022
(73) Proprietor: MyPauze Holding AB, 351 96 Växjö (SE)
(72) Inventor: JONSSON, Stephanie S., 35196 VÄXJÖ (SE)
(74) Representative: AWA Sweden AB
(86) International application number: PCT/SE2020/050707
(87) International publication number: WO 2021/006801

(56) References cited:
- EP-A1- 0 012 923
- EP-A1- 0 545 494
- WO-A1-2009/140992
- JP-A- 2007 301 164
- KR-A- 20070 041 248
- US-A- 3 858 280
- US-A- 5 393 239
- US-A1- 2005 205 622
- US-A1- 2008 009 171
- US-A1- 2009 199 939
- US-A1- 2012 217 275
- US-A1- 2016 316 053
- US-A1- 2019 082 321
- US-B1- 9 803 400

## Description

### Technical Field of the Invention

The present invention relates to a portable electronic device case comprising a front panel and a rear panel which are arranged to receive a portable electronic device through an opening, and a locking mechanism arranged to secure said opening.

### Background Art

Lockable cases may be used to limit user control of portable electronic devices, such as cell phones, tablets and laptops.

US 9,819,788 describes a cell phone case provided with a locking means to secure the opening of such a case. The locking means comprises a protruding locking member in the form of a narrow staple that is arranged to be received in a female locking member.

However, such a locking means may be considered difficult and/or unsafe to handle.

Document US 2019/082321 A1 describes a case for selectively limiting user control of a mobile electronic device. The case comprises a front panel, a rear panel and a locking means to secure an opening thereof.

Document KR 2007 0041248 A describes a cell phone case for blocking radio waves. The case is an envelope made by integrally combining edges of two panels. Each panel comprises a radio wave blocking film. The case comprises a locking member for sealing an opening formed at one end of the envelope.

Document US 9 803 400 B1 describes a springless ball and clutch locking mechanism. The locking mechanism includes a chamber, a multitude of ball bearings, a bearing housing, and a pin.

Document EP 0 545 494 A1 describes an anti-theft tag that comprises a carrier and a counterpart which can be fastened to the carrier. The carrier has a housing which is provided with locking means and in which a pin of the counterpart can be locked.

Document EP 0 012 923 A1 describes a locking device adapted to be used in a system for preventing unauthorized removal of articles from department stores, boutiques, or the like. The locking device includes a housing, a spring biased insert, arcuately spaced retaining balls, and cup means which is securely mounted in the housing and retains the balls at the lower end of the insert.

### Summary of the Invention

It is an object of the present invention to provide an improved portable electronic device case. Another object of the present invention is to provide a portable electronic device case that enables a mobile device to be disconnected from a communication network.

These and other objects that will be apparent from the following summary and description are achieved by a portable electronic device case according to the appended claims.

According to one aspect of the present disclosure there is provided a portable electronic device case comprising a front panel and a rear panel which are arranged to receive a portable electronic device through an opening, and a locking mechanism arranged to secure said opening, wherein said locking mechanism comprises a male connector having an engagement portion, said male connector being connected to a first one of said panels, a female connector having an axial opening configured to receive the engagement portion of said male connector, said female connector being connected to the other one of said panels, a first magnetic locking element which is received in a locking element cavity formed in said female connector, said first locking element cavity, or a side wall of said first locking element cavity, extending in a direction which forms an angle with the axial direction of said axial opening, wherein said first locking element is movable in said first locking element cavity between a locking position, to which it is biased by a resilient element and in which it is arranged to engage the engagement portion of the male connector to prevent the male connector from being retracted from the female connector, and a non-locking position in which it allows the engagement portion of the male connector to be retracted from the solution having few parts and that is easy to produce. Furthermore, the locking device enables a case having an attractive appearance.

According to one embodiment said first magnetic locking element is a magnetic locking ball.

According to one embodiment said resilient element is a compression spring. This embodiment has the advantage that a very robust and durable solution is provided.

According to one embodiment said engagement portion is a pin and preferably a pin having a chamfered or rounded outer end, in order to facilitate locking of the male connector to the female connector.

One of the panels comprises a foldable portion, in order to facilitate locking of the male connector and the female connector to each other. Furthermore, the foldable portion forms a protecting cover when the male connector and the female connector are locked to each other.

Each of said panels comprises an electromagnetic shielding layer, in order to prevent an electronic device received in the case from receiving and sending signals from and to another electronic device. In this embodiment a shielded enclosure is thus provided. Hence, a mobile device enclosed in the case is thus effectively disconnected from a communication network. This allows a user to disconnect a mobile device without having to switch it off.

Said male connector is connected, or attached, to the front panel and said female connector is connected, or attached, to a foldable portion of the rear panel. This embodiment has the advantage that reliable shielding and/or sealing properties may be provided, yet providing a robust and user-friendly locking function. Furthermore, production and/or assembly of the case is facilitated. Especially, mounting of different parts of the locking mechanism is facilitated.

A base portion of said male connector is located between an electromagnetic shielding layer and an outer layer of the front panel. This embodiment has the advantage that a shielding layer of the front panel may be held intact, which secures that a reliable shielding is achieved.

At least one of said electromagnetic shielding layers extends beyond the front panel, as seen in a direction from said male connector towards said female connector when the rear panel is situated in an unfolded configuration. This embodiment has the advantage that sealing and/or shielding properties of the case may be even further improved.

According to one embodiment said angle is in the range of 10-70°, more preferably 11-60°, and most preferably 12-50°, in order to provide a reliable locking mechanism. According to one embodiment said angle is 45°. According to another embodiment said angle is 16°.

Said angle may be at least 10°, or at least 12°, or at least 14°, or at least 16°, or at least 20°, or at least 22°, or at least 25°, or at least 30°. Additionally, or alternatively, said angle may be at most 70°, or at most 60°, or at most 55°, or at most 50°, or at most 45°, or at most 40°, or at most 30°, or at most 25°, or at most 20°.

According to one embodiment said female connector comprises a main member, in which said first locking element cavity is formed and in which a recess for receiving a closing member is formed. Such a separate closing member facilitates positioning of the resilient element and the locking element. This embodiment thus has the advantage that a locking mechanism that is easy to assemble is provided.

According to one embodiment said case further comprises a sleeve which is configured for connecting said female connector to one of the panels. In one embodiment the sleeve comprises an internally threaded portion that is configured to engage an externally threaded portion of the female connector, which enables the female connector to be connected to a panel in a very easy and robust manner.

According to one embodiment said locking mechanism comprises at least one further magnetic locking element which is received in a said first locking element cavity or in a further locking element cavity formed in said female connector and extending in a direction that forms an angle with the axial direction of said axial opening, which may enable an even more robust solution.

According to one embodiment said locking mechanism comprises three magnetic locking elements, preferably three magnetic locking balls, each of which is received in said first locking element cavity.

According to one embodiment said locking mechanism comprises four magnetic locking elements, preferably four magnetic locking balls, each of which is received in a locking element cavity formed in said female connector, which may enable an even more robust and/or reliable solution.According to one embodiment said locking element holder has two, recesses, preferably three recesses, each of which recess is configured to hold a respective locking element.

According to one embodiment said locking mechanism comprises three magnetic locking elements, preferably three magnetic locking balls, each of which is received in a respective locking element cavity.

According to one embodiment the case comprises two compartments, one of which is electromagnetically shielded and one of which is not electromagnetically shielded. This embodiment has the advantage that a user may choose to be contactable or not while storing a device in a locked case.

These and other aspects of the invention will be apparent from and elucidated with reference to the claims and the embodiments described hereinafter.

### Brief Description of the Drawings

The invention will now be described in more detail with reference to the appended drawings in which:
Fig. 1 illustrates a portable electronic device case according to an embodiment of the present disclosure.
Fig. 2 is an exploded view and illustrates a locking mechanism of the portable electronic device case shown in Fig. 1.
Figs. 3A-F serve to illustrate the function of the portable electronic device case shown in Fig. 1.
Figs. 4A illustrates a portable electronic device case according to an alternative embodiment of the present disclosure in an unlocked state.
Figs. 4B illustrates the portable electronic device case shown in Fig. 4A in a locked state.
Figs. 5A-D serve to illustrate a locking mechanism of the portable electronic device case shown in Fig. 5A.

### Detailed Description of Preferred Embodiments of the Invention

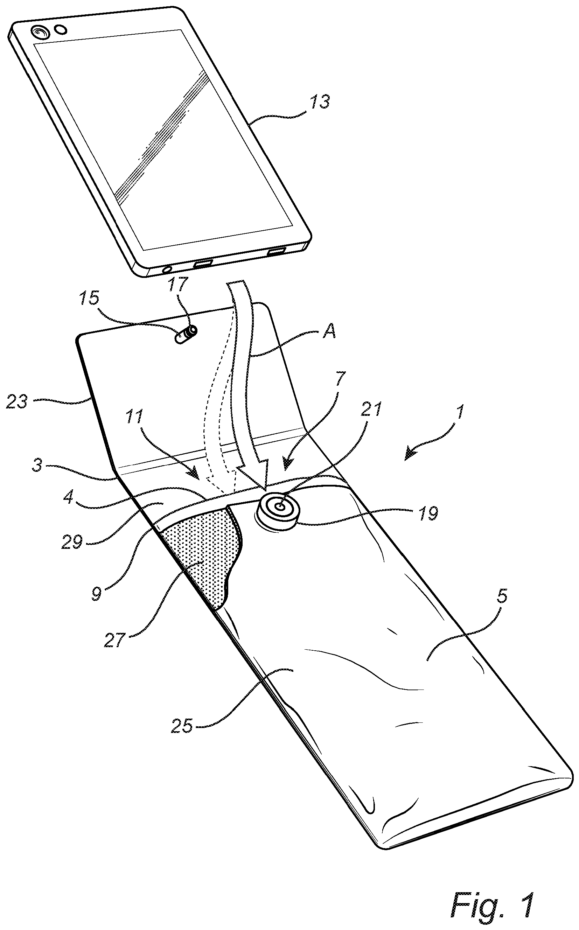

Fig. 1 shows a portable electronic device case 1 according to an embodiment of the present disclosure. The portable electronic device case 1 comprises a rear panel 3, an intermediate panel 4, a front panel 5, and a locking mechanism 7. A first panel portion 9 of the rear panel 3, the intermediate panel 4 and the front panel 5 are interconnected, e.g. by sewn seams, along three edges thereof such that an opening 11 is formed. The front panel 5 and the intermediate panel 4, which is arranged between the rear panel 3 and the front panel 5, together form a first compartment. The rear panel 3 and the intermediate panel 4 together form a second compartment. The opening 11 is sized to receive a cell phone 13 in the first pocket, as illustrated by arrow A in Fig. 1, or in the second compartment as illustrated by the dashed arrow in Fig. 1.

The locking mechanism 7 is arranged to secure to the opening 11. To this end the locking mechanism 7 comprises a male connector 15 having an engagement portion, in the form of an engagement pin 17, and a female connector 19 having an axial opening 21 which is configured to receive the engagement pin 17 of the male connector 15. The male connector 15 is connected to a second panel portion, in the form of a foldable panel portion 23, of the rear panel 3 and the female connector 19 is connected to the front panel 5. When the male connector 15 and the female connector 19 are locked to each other the foldable panel portion 23 forms a protecting cover.

Each of the intermediate panel 4 and the front panel 5 comprises an inner layer, an outer layer, and an electromagnetic shielding layer situated between therebetween. In Fig. 1 a portion of the outer layer 25 of the front panel 5 has been removed to illustrate the electromagnetic shielding layer 27 of the front panel 5. The electromagnetic shielding layers 27 prevent a device 13 received in the first compartment of the case 1 from receiving and sending signals from and to another electronic device. The shielding layers 27 thus provides for a shielded enclosure.

Hence, the front panel 5 comprises an outer layer, in the form of a fabric layer 25, an inner layer, in the form of a fabric layer (not shown), and an intermediate layer in the form of an electromagnetic shielding layer 27, and the rear panel 3 comprises an outer layer, in the form of a fabric layer (not shown) and an inner layer in the form of a fabric layer 29. The intermediate layer 4 comprises a first layer, in the form of a fabric layer, a second layer, in the form of a fabric layer (not shown), and an intermediate layer in the form of an electromagnetic shielding layer (not shown). The first compartment of the case 1 is thus electromagnetically shielded whereas the second compartment is not electromagnetically shielded.

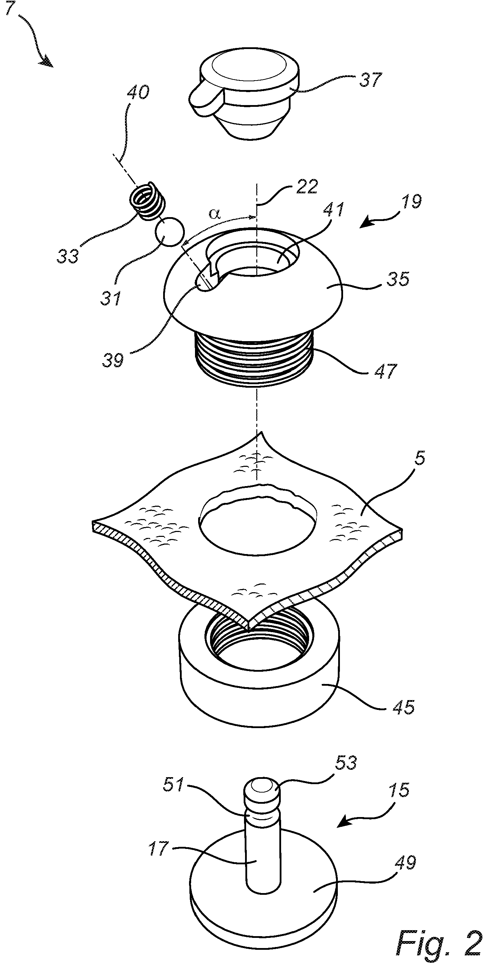

Now referring to Fig. 2, the locking mechanism 7 comprises the male connector 15, the female connector 19, a first magnetic locking element, in the form of a magnetic locking ball 31, and a resilient element in the form of a compression spring 33. In this embodiment the female connector 19 comprises a first member, in the form of a main body 35, and a second member in the form of a closing plug 37. A first elongated locking ball cavity 39, which is configured to receive the first locking ball 31 and the compression spring 33, is formed in the main body 35 of the female connector 19. The main member 35 of the female connector 19 further comprises a recess 41 configured for receiving the closing plug 37. Upon assembly of the female connector 19 the first locking ball 31 and the compression spring 33 is first positioned in the first locking ball cavity 39 and then the closing plug 37 is received in the recess 41 of the main body 35 and secured thereto, e.g. by means of glue or a snap fit mechanism. The closing plug 37 comprises a projecting portion 43 that forms an outer end wall of the first locking ball cavity 39 when the closing plug 37 is received in the recess 41 of the main member 35.

The main member 35 of the female connector 19 is connected to the front panel 5 by means of an internally threaded sleeve 45. To this end the main member 35 has an externally threaded portion 47.

The male connector 15 comprises a base plate 49 and the engagement pin 17 which projects from the base plate 49. A radial groove 51 is formed at the outer end of the engagement pin 17. The outer end of the engagement pin 17 is chamfered and forms an inclined contact surface 53. The base plate 49, which in this embodiment is circular, of the male connector 15 is configured to be received between two of the layers of the foldable panel portion 23 of the rear panel 3 and the engagement portion 17 is configured to project from the foldable panel portion 23 of rear panel 3 through an opening in the inner layer 29 thereof, as illustrated in Fig. 1.

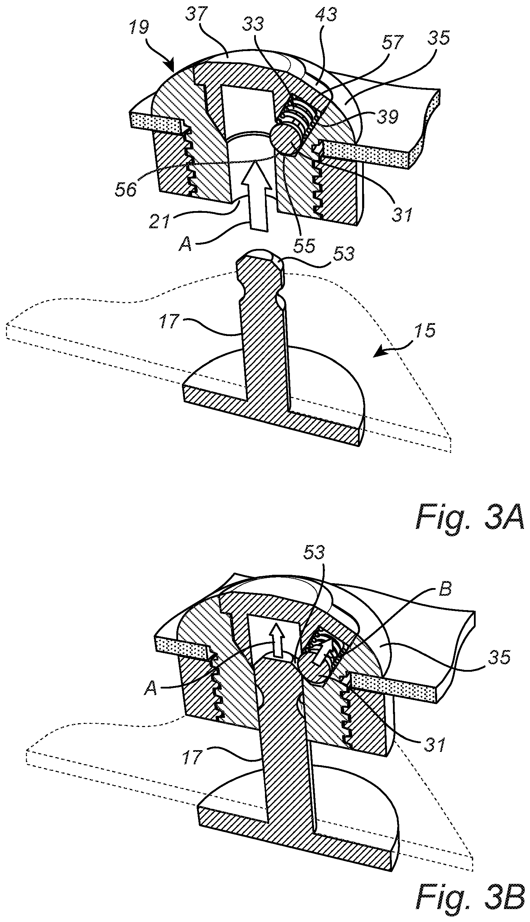

With reference to Figs. 3A-F, the function of the locking mechanism 7 will be described hereinafter.

Fig. 3A illustrates the locking mechanism 7 in a disengaged position.

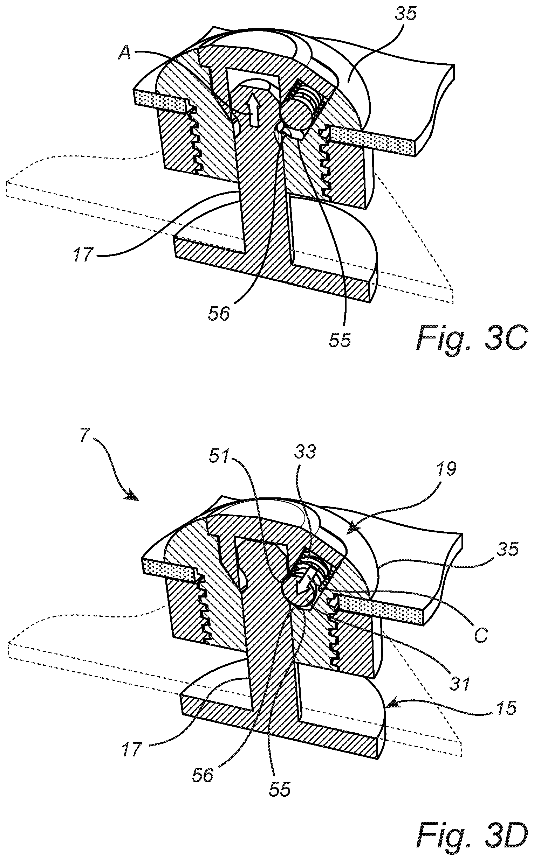

As illustrated in Fig. 3A an inner end wall of the first locking ball cavity 39, which is formed by a portion of the main member 35 of the female connector 19, forms a locking ball seat 55 for the first locking ball 31 and the outer end wall of the first locking ball cavity 39, i.e. the end wall formed by the projection 43 of the closing plug 37, forms a seat 57 for the compression spring 33. The compression spring 33 is thus arranged to be pressed against the spring seat 57. The first locking ball 31 is forced against the locking ball seat 55 by the compression spring 33. Then, the inner end wall of the locking ball cavity 39 prevents the first locking ball 31 from being pushed out of the first locking ball cavity 39 by the compression spring 33. A portion of the main member 35 forms a collar 56, best illustrated in Fig. 3C, which forms a part of the inner end wall of the locking ball cavity 39.

Upon insertion of the engagement pin 17 of the male connector 15, as illustrated by arrows A in Figs. 3A-C, the chamfered contact surface 53 of the engagement pin 17 comes into contact with and pushes away the locking ball 31, as illustrated by arrow B in Fig. 3B.

When the engagement pin 17 has been inserted to such extent that the radial groove 51 is exposed to the first locking ball cavity 39 the first locking ball 31 is urged into a locking position, illustrated in Fig. 3D, in the radial groove 51 by the compression spring 33, as illustrated by arrow C in Fig. 3D. In the locking position the first locking ball 31 mechanically constrains retraction of the engagement pin 17 by contact with the locking ball seat 55. Then, the male connector 15 is locked to the female connector 19, which secures the opening of the case 1. In the locking position mechanical interaction of the surface of the radial groove 51, the first locking ball 31 and the locking ball seat 55 prevents the engagement pin 17 of the male connector 15 from being retracted from the axial opening 21 of the female connector 19.

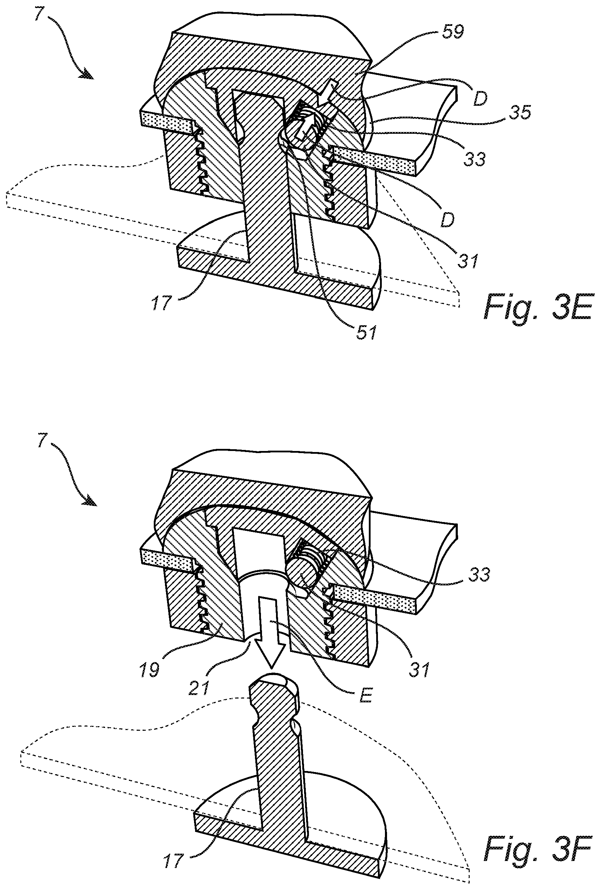

To unlock the locking mechanism 7, a magnetic device 59 is positioned on top of the female connector 19. Magnetic attraction force, illustrated by arrows D in Fig. 3E, between the magnetic device 59 and the first magnetic ball 31 then causes the first magnetic locking ball 31 to be moved, against the spring force of the compression spring 33, away from the locking position to a non-locking position, illustrated in Fig. 3F. When the first locking ball 31 is situated in the non-locking position, the engagement pin 17 of the male connector 15 is allowed to be retracted from the axial opening 21 of the female connector 19, as illustrated by arrow E in Fig. 3F, to unlock the locking mechanism 7 and thereby unsecure the opening 9 of the case 1.

A second elongated locking element cavity (not shown) which is configured to receive a further locking element, in the form of a second locking ball (not shown), may be formed in the main body 35 of the female connector 19. Such a second locking element cavity may have the same shape as the first locking element cavity 39 described hereinbefore. Also, a third elongated locking element cavity (not shown) which is configured to receive a further locking element, in the form of a third locking ball (not shown), may be formed in the main body 35 of the female connector 19. Such a third locking element cavity may also have the same shape as the first locking element cavity 39 described hereinbefore. It is appreciated that the female connector 19 may be formed with even a further such locking element cavity or further such locking element cavities.

The locking mechanism 7 may thus comprise two or more locking elements, each of which is received in a respective locking element cavity formed in the main body 35 of the female connector 19.

The function of such further locking element(s) of the locking mechanism 7 is identical with the function of the first locking element 31 described hereinabove.

Preferably, the locking mechanism comprises three locking elements, each of which is receieved in a respective locking element cavity, which provides a robust solution that is easy to operate.

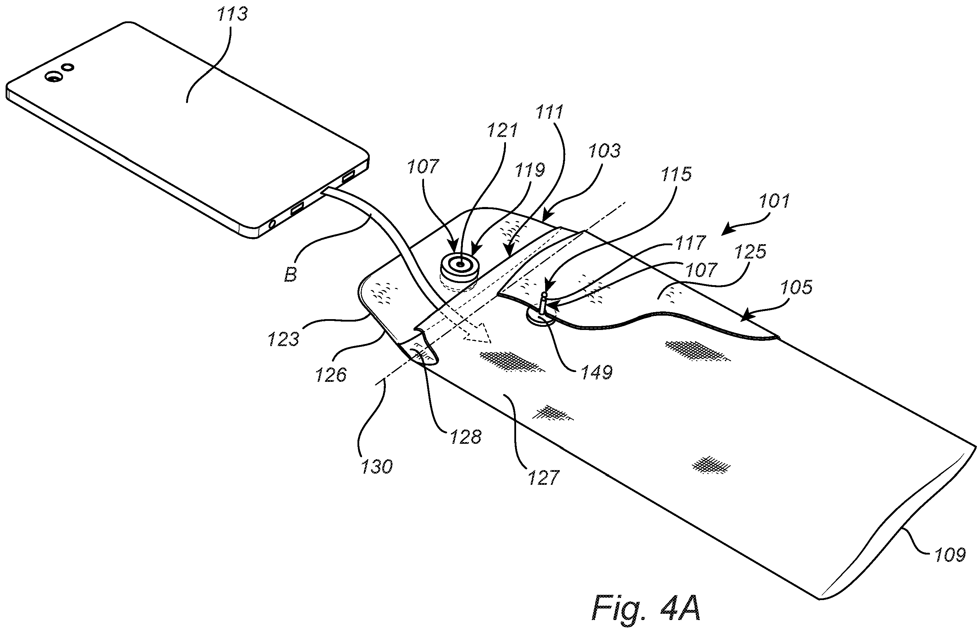

Fig. 4A shows a portable electronic device case 101 according to a second embodiment of the present disclosure. The portable electronic device case 101 comprises a rear panel 103, a front panel 105, and a locking mechanism 107. A first panel portion 109 of the rear panel 103 and the front panel 105 are interconnected, e.g. by sewn seams, along three edges thereof such that an opening 111 is formed. The front panel 105 and the first portion 109 of the rear panel 103 together form a compartment. The opening 111 is sized to receive a cell phone 113, as illustrated by arrow B in Fig. 4A, for storage of the cell phone 113.

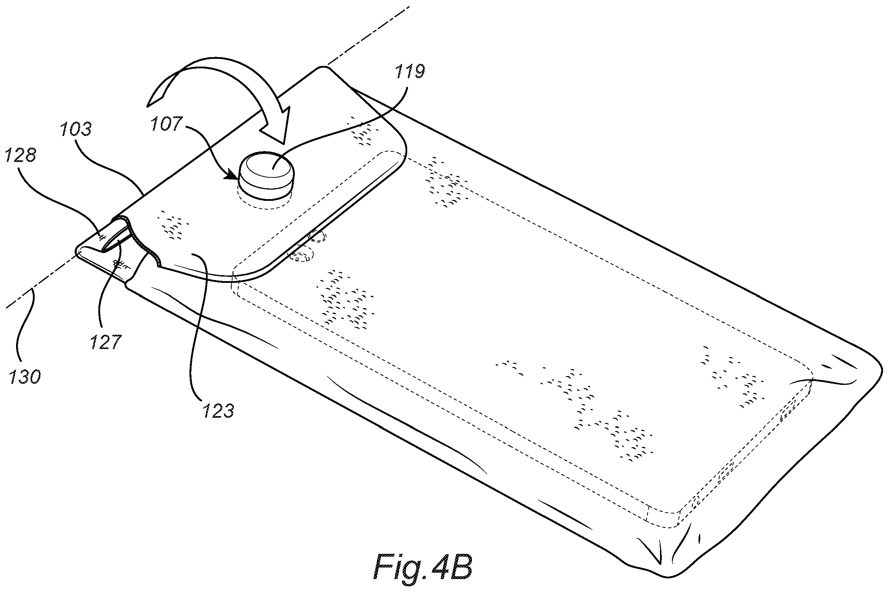

The locking mechanism 107 is arranged to secure the opening 111. To this end the locking mechanism 107 comprises a male connector 115 having an engagement portion, in the form of an engagement pin 117, and a female connector 119 having an axial opening 121 which is configured to receive the engagement pin 117 of the male connector 115. The male connector 115 is connected to the front panel 105, and the female connector 119 is connected to a second panel portion, in the form of a foldable panel portion 123, of the rear panel 103. When the male connector 115 and the female connector 119 are locked to each other, as illustrated in Fig. 4B, the foldable panel portion 123 of the rear panel 103 forms a protecting cover.

Each of the rear panel 103 and the front panel 105 comprises an inner layer, in the form of an electromagnetic shielding layer, and an outer layer in the form of a fabric layer. In Fig. 4A, a portion of the outer layer 125 of the front panel 105 has been removed to illustrate the electromagnetic shielding layer 127 of the front panel 105 and a portion of the shielding layer 127 of the front panel 105 has been removed to illustrate the electromagnetic shielding layer 128 of the rear panel 103. The electromagnetic shielding layers 127, 128 prevent a device 113 received in the compartment of the case 101 from receiving and sending signals from and to another electronic device. The shielding layers 127, 128 thus provide for a shielded enclosure.

Hence, the front panel 105 comprises an outer layer, in the form of a fabric layer 125, and an inner layer in the form of an electromagnetic shielding layer 127, and the rear panel 103 comprises an outer layer, in the form of a fabric layer 126, and an inner layer in the form of an electromagnetic shielding layer 128. A base portion, in the form of a base plate 149, of the male connector 115 is arranged between the inner layer 127 and the outer layer 125 of the front panel 105, which enables the shielding layer 127 of the front panel 105 to be intact, although a reliable locking mechanism is provided. Hence, the engagement pin 117 of the male connector 115 extends only through the outer layer, i.e. the fabric layer 125, of the front panel 105.

As illustrated in Fig. 4A, the shielding layers 127, 128 extend beyond the outer layer 125 of the front panel 105 and beyond a folding line 130 of the rear panel 103. This provides for a sealed enclosure when the device 101 is situated in a locked configuration, as illustrated in Fig. 4B. It is however understood that the shielding layer(s) may have the same size as the outer layer 125 of the front panel and still provide a shielded and sealed enclosure.

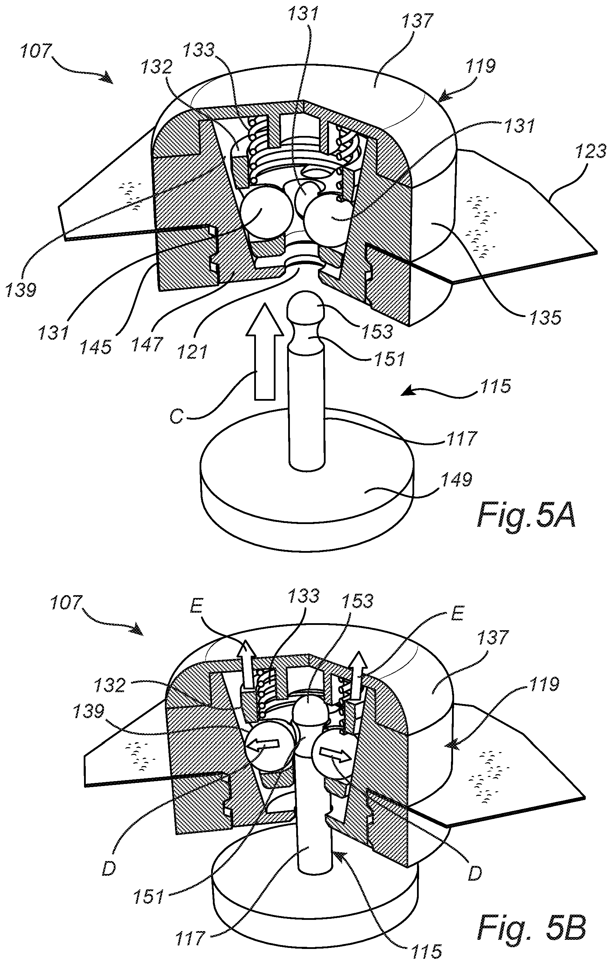

Now referring to Fig. 5A, the locking mechanism 107 comprises the male connector 115, the female connector 119, magnetic locking elements, in the form of three magnetic locking balls 131, and a resilient element in the form of a compression spring 133. In this embodiment the female connector 119 comprises a first member, in the form of a main body 135, and a second member in the form of a closing plug 137. A tapered locking ball cavity 139, which is configured to receive the locking balls 131 and the compression spring 133, is formed in the main body 135 of the female connector 119. The locking ball cavity 139 tapers as seen in a direction towards the axial opening 121 of the female connector 119. In other words, a side wall of the locking ball cavity 139 extends in a direction that forms an angle with the axial direction of said axial opening 121. The angle formed between the side wall of the locking ball cavity 139 and the axial direction of the axial opening 121 is in the range of 10-70°, more preferably 11-60°, and most preferably 12-50°.

The magnetic locking balls 131 are received in recesses of an axially movable locking ball holder 132. The locking ball holder 132 has a conical shape and serves to hold the locking balls 131 in place in the locking ball cavity 139. Upon assembly of the female connector 119, the locking balls 131, held by the locking ball holder 132, and the compression spring 133 are first positioned in the locking ball cavity 139 and then the closing plug 137 is secured thereto, e.g. by means of glue or a snap fit mechanism.

The main member 135 of the female connector 119 is connected to the foldable portion 123 of the rear panel panel 103 by means of an internally threaded sleeve 145. To this end the main member 135 has an externally threaded portion 147.

The male connector 115 comprises the base plate 149 and the engagement pin 117 which projects from the base plate 149. A radial groove 151 is formed at the outer end of the engagement pin 117. The outer end of the engagement pin 117 is rounded and forms a curved contact surface 153. The base plate 149, which in this embodiment is circular, of the male connector 115 is configured to be received between the shielding layer 127 and the outer layer 125 of the front panel 105, and the engagement portion 117 is configured to project from the front panel 105 through an opening in the outer layer 125 thereof, as illustrated in Fig. 4A.

With reference to Figs. 5A-D, the function of the locking mechanism 107 will be described hereinafter.

Fig. 5A illustrates the locking mechanism 107 in a disengaged position.

As illustrated in Fig. 5A, the compression spring 133 is arranged to urge the magnetic locking balls 131 in a direction towards the axial opening 121 of the female connector 119. To achieve this, the compression spring 133 is arranged between an inner wall of the closing plug 137 and the locking balls 131.

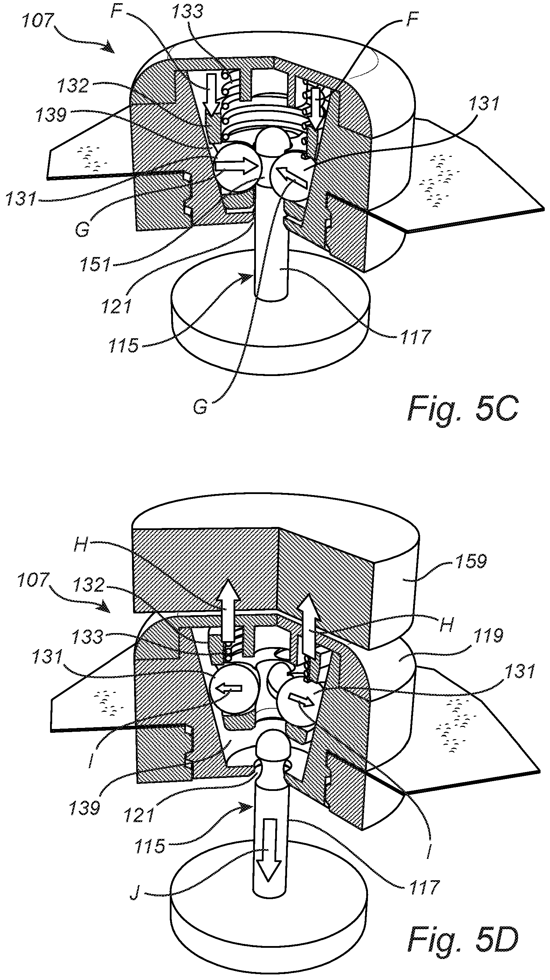

Upon insertion of the engagement pin 117 of the male connector 115, as illustrated by arrow C in Fig. 5A, the curved contact surface 153 of the engagement pin 117 comes into contact with and pushes away the locking balls 131, as illustrated by arrows D in Fig. 5B, which causes the locking ball holder 132 to move axially in a direction towards the end plug 137, as illustrated by arrows E in Fig. 5B. Upon this movement the compression spring 133 is compressed. When the engagement pin 117 has been inserted to such extent that the radial groove 151 is exposed to the locking balls 131 or longer, as illustrated in Fig. 5C, a locking position is reached.

In such a locking position, the compression spring 133 presses the locking balls 131 and the locking ball holder 132 in a direction towards the axial opening 121 of the female connector 119, as illustrated by arrows F in Fig. 5C, which causes the locking balls 131 to be received in the radial groove 151 of the engagement pin 117, as illustrated by arrows G in Fig. 5C. In the locking position, the locking balls 131 mechanically constrains retraction of the engagement pin 117 by contact with the tapered wall of the locking ball cavity 139 and the head of the engagement pin 117. Then, the male connector 115 is locked to the female connector 119, which secures the opening 111 of the case 101. In the locking position mechanical interaction of the surface of the radial groove 151, the locking balls 131 and the inclined surface of the locking ball cavity 139 prevents the engagement pin 117 of the male connector 115 from being retracted from the axial opening 121 of the female connector 119.

To unlock the locking mechanism 107, a magnetic device 159 is positioned on top of the female connector 119, as illustrated in Fig. 5D. Magnetic attraction force, illustrated by arrows H in Fig. 5D, between the magnetic device 159 and the magnetic locking balls 131 then causes the magnetic locking balls 131 and the locking ball holder 132 to be moved, against the spring force of the compression spring 133, away from the locking position to a non-locking position, as illustrated by arrows I in Fig. 5D. When the locking balls 131 is situated in the non-locking position, illustrated in Fig. 5D, the engagement pin 117 of the male connector 115 is allowed to be retracted from the axial opening 121 of the female connector 119, as illustrated by arrow J in Fig. 5D, to unlock the locking mechanism 107 and thereby unsecure the opening 111 of the case 101.

It will be appreciated that numerous variants of the embodiments described above are possible within the scope of the appended claims.

## Claims

1. Portable electronic device case (101) comprising a front panel (105) and a rear panel (103) which are arranged to receive a mobile electronic device (13; 113) through an opening (111), and a locking mechanism (7; 107) arranged to secure said opening (111), said locking mechanism (7; 107) comprises
a male connector (15; 115) having an engagement portion (17; 117), said male connector (15; 115) being connected to said front panel (105),
a female connector (19; 119) having an axial opening (21; 121) configured to receive the engagement portion (17; 117) of said male connector (15; 115), said female connector (19; 119) being connected to a foldable portion (123) of said rear panel (103),
a first magnetic locking element (31; 131) which is received in a first locking element cavity (39; 139) formed in said female connector (19; 119), said first locking element cavity (39), or a side wall of said first locking element cavity (139), extending in a direction which forms an angle (α) with the axial direction of said axial opening (21; 121), wherein
said first locking element (31; 131) is movable in said first locking element cavity (39; 139) between a locking position, to which it is biased by a resilient element (33; 133) and in which it is arranged to engage the engagement portion (17, 51; 117, 151) of the male connector (15; 115) to prevent the male connector (15; 115) from being retracted from the female connector (19; 119), and a non-locking position in which it allows the engagement portion (17; 117) of the male connector (15; 115) to be retracted from the female connector (19; 119),
**characterized in that**
said locking mechanism (7; 107) comprises at least one further magnetic locking element (131) which is received in said first locking element cavity (139) or in a further locking element cavity formed in said female connector (19) and extending in a direction that forms an angle with the axial direction of said axial opening (21; 121), wherein each of said panels comprises an electromagnetic shielding layer (127, 128), at least one of which extends beyond the front panel (105) as seen in a direction from said male connector (115) towards said female connector (119) when the rear panel (103) is situated in an unfolded configuration, and a base portion (149) of said male connector (115) is arranged between said electromagnetic shielding layer (127) of the front panel (105) and an outer layer (125) of the front panel (105).

2. A mobile electronic device (1; 101) case according to claim 1, wherein said first magnetic locking element is a locking ball (31; 131).

3. A portable electronic device case (1; 101) according to any one of the preceeding claims, wherein said resilient element is a compression spring (33; 133).

4. A portable electronic device case (1; 101) according to any one of the preceeding claims, wherein said engagement portion is a pin (17; 117) and preferably a pin (17; 117) having a chamfered (53) or rounded (153) outer end.

5. A portable electronic device case (101) according to any one of the preceeding claims, wherein said angle (α) is in the range of 10-70°, more preferably 11-60°, and most preferably 12-50°.

6. A portable electronic device case (101) according to any one of the preceeding claims, wherein said female connector (19; 119) comprises a main member (35; 135), in which said first locking element cavity (39; 139) is formed and in which a recess (41) for receiving a closing member (37; 137) is formed.

7. A portable electronic device case (101) according to any one of the preceeding claims, wherein said case further comprises a sleeve (45; 145) which is configured for connecting said female connector (19; 119) to one (5; 103) of the panels (103, 105).

8. A portable electronic device case (101) according to any one of the preceeding claims, wherein said locking mechanism (7; 107) comprises at least one further magnetic locking element (131) which is received in a said first locking element cavity (139) or in a further locking element cavity formed in said female connector (19) and extending in a direction that forms an angle with the axial direction of said axial opening (21).

9. A portable electronic device case (101) according to any one of the preceeding claims, wherein said locking mechanism (107) comprises three magnetic locking elements (131), preferably three magnetic locking balls (131), each of which is received in said first locking element cavity (139).

10. A portable electronic device case (101) according to claim 9, wherein said locking mechanism (107) comprises a tapered locking element holder (132) having at least two recesses, preferably three recesses, each of which recess is configured to hold a respective locking element (131).

11. A portable electronic device case (101) according to claim 10, wherein said locking element holder (132) has three recesses, each of which recess is configured to hold a respective locking element (131).

12. A portable electronic device case (1) according to any one of the claims 1-8, wherein said locking mechanism (7) comprises three magnetic locking elements (31), preferably three magnetic locking balls (31), each of which is received in a respective locking element cavity (39).

## Patentansprüche

1. Tragbare Hülle (101) für ein elektronisches Gerät, umfassend eine vordere Wand (105) und eine hintere Wand (103), die angeordnet sind, um ein mobiles elektronisches Gerät (13; 113) durch eine Öffnung (111) aufzunehmen, und einen Verriegelungsmechanismus (7; 107), der angeordnet ist, um die Öffnung (111) zu sichern, wobei der Verriegelungsmechanismus (7; 107) umfasst:
einen Steckverbinder (15; 115) mit einem Eingriffsabschnitt (17; 117), wobei der Steckverbinder (15; 115) mit der vorderen Wand (105) verbunden ist,
einen Aufnahmeverbinder (19; 119) mit einer axialen Öffnung (21; 121), die eingerichtet ist, um den Eingriffsabschnitt (17; 117) des Steckverbinders (15; 115) aufzunehmen, wobei der Aufnahmeverbinder (19; 119) mit einem faltbaren Abschnitt (123) der hinteren Wand (103) verbunden ist,
ein erstes magnetisches Verriegelungselement (31; 131), das in einem Hohlraum (39; 139) für das erste Verriegelungselement aufgenommen ist, der in dem Aufnahmeverbinder (19; 119) gebildet ist, wobei der Hohlraum (39) für das erste Verriegelungselement oder eine Seitenwand des Hohlraums (139) für das erste Verriegelungselement sich in einer Richtung erstreckt, die einen Winkel (α) mit der axialen Richtung der axialen Öffnung (21; 121) bildet, wobei
das erste Verriegelungselement (31; 131) in dem Hohlraum (39; 139) für das erste Verriegelungselement zwischen einer Verriegelungsposition, in die es durch ein elastisches Element (33; 133) vorgespannt ist und in der es angeordnet ist, um mit dem Eingriffsabschnitt (17, 51; 117, 151) des Steckverbinders (15; 115) in Eingriff zu stehen, um zu verhindern, dass der Steckverbinder (15; 115) aus dem Aufnahmeverbinder (19; 119) herausgezogen wird, und einer Nicht-Verriegelungsposition, in der es dem Eingriffsabschnitt (17; 117) des Steckverbinders (15; 115) ermöglicht, aus dem Aufnahmeverbinder (19; 119) herausgezogen zu werden, bewegbar ist,
**dadurch gekennzeichnet, dass**
der Verriegelungsmechanismus (7; 107) mindestens ein weiteres magnetisches Verriegelungselement (131) umfasst, das in dem Hohlraum (139) für das erste Verriegelungselement oder in einem Hohlraum für das weitere Verriegelungselement aufgenommen ist, der in dem Aufnahmeverbinder (19) gebildet ist und sich in einer Richtung erstreckt, die einen Winkel mit der axialen Richtung der axialen Öffnung (21; 121) bildet, wobei jede der Wände eine elektromagnetische Abschirmschicht (127, 128) umfasst, von denen sich mindestens eine über die vordere Wand (105) hinaus erstreckt, gesehen in einer Richtung von dem Steckverbinder (115) zu dem Aufnahmeverbinder (119), wenn sich die hintere Wand (103) in einer ungefalteten Konfiguration befindet, und ein Basisabschnitt (149) des Steckverbinders (115) zwischen der elektromagnetischen Abschirmschicht (127) der vorderen Wand (105) und einer äußeren Schicht (125) der vorderen Wand (105) angeordnet ist.

2. Hülle für ein mobiles elektronisches Gerät (1; 101) nach Anspruch 1, wobei das erste magnetische Verriegelungselement eine Verriegelungskugel (31; 131) ist.

3. Tragbare Hülle (1; 101) für ein elektronisches Gerät nach einem der vorhergehenden Ansprüche, wobei das elastische Element eine Druckfeder (33; 133) ist.

4. Tragbare Hülle (1; 101) für ein elektronisches Gerät nach einem der vorhergehenden Ansprüche, wobei der Eingriffsabschnitt ein Stift (17; 117) und vorzugsweise ein Stift (17; 117) mit einem abgeschrägten (53) oder abgerundeten (153) äußeren Ende ist.

5. Tragbare Hülle (101) für ein elektronisches Gerät nach einem der vorhergehenden Ansprüche, wobei der Winkel (α) in dem Bereich von 10-70°, bevorzugter 11-60° und am meisten bevorzugt 12-50° liegt.

6. Tragbare Hülle (101) für ein elektronisches Gerät nach einem der vorhergehenden Ansprüche, wobei der Aufnahmeverbinder (19; 119) ein Hauptelement (35; 135) umfasst, in dem der Hohlraum (39; 139) für das erste Verriegelungselement gebildet ist und in dem eine Aussparung (41) zum Aufnehmen eines Schließelements (37; 137) gebildet ist.

7. Tragbare Hülle (101) für ein elektronisches Gerät nach einem der vorhergehenden Ansprüche, wobei die Hülle ferner eine Hülse (45; 145) umfasst, die eingerichtet ist, um den Aufnahmeverbinder (19; 119) mit einer (5; 103) der Wände (103, 105) zu verbinden.

8. Tragbare Hülle (101) für ein elektronisches Gerät nach einem der vorhergehenden Ansprüche, wobei der Verriegelungsmechanismus (7; 107) mindestens ein weiteres magnetisches Verriegelungselement (131) umfasst, das in einem Hohlraum (139) für das erste Verriegelungselement oder in einem Hohlraum für das weitere Verriegelungselement aufgenommen ist, der in dem Aufnahmeverbinder (19) gebildet ist und sich in einer Richtung erstreckt, die einen Winkel mit der axialen Richtung der axialen Öffnung (21) bildet.

9. Tragbare Hülle (101) für ein elektronisches Gerät nach einem der vorhergehenden Ansprüche, wobei der Verriegelungsmechanismus (107) drei magnetische Verriegelungselemente (131), vorzugsweise drei magnetische Verriegelungskugeln (131), umfasst, von denen jede/s in dem Hohlraum (139) für das erste Verriegelungselement aufgenommen ist.

10. Tragbare Hülle (101) für ein elektronisches Gerät nach Anspruch 9, wobei der Verriegelungsmechanismus (107) einen sich verjüngenden Verriegelungselementhalter (132) mit mindestens zwei Aussparungen, vorzugsweise drei Aussparungen, umfasst, wobei jede Aussparung eingerichtet ist, um ein jeweiliges Verriegelungselement (131) zu halten.

11. Tragbare Hülle (101) für ein elektronisches Gerät nach Anspruch 10, wobei der Verriegelungselementhalter (132) drei Aussparungen aufweist, wobei jede Aussparung eingerichtet ist, um ein jeweiliges Verriegelungselement (131) zu halten.

12. Tragbare Hülle (101) für ein elektronisches Gerät nach einem der Ansprüche 1-8, wobei der Verriegelungsmechanismus (7) drei magnetische Verriegelungselemente (31), vorzugsweise drei magnetische Verriegelungskugeln (31), umfasst, von denen jede/s in einem Hohlraum (39) für das jeweilige Verriegelungselement aufgenommen ist.

## Revendications

1. Boîtier pour dispositif électronique portable (101) comprenant un panneau avant (105) et un panneau arrière (103) qui sont agencés pour recevoir un dispositif électronique mobile (13 ; 113) à travers une ouverture (111), et un mécanisme de verrouillage (7 ; 107) agencé pour fixer ladite ouverture (111),
ledit mécanisme de verrouillage (7 ; 107) comprenant
un connecteur mâle (15 ; 115) ayant une section d'engagement (17 ; 117), ledit connecteur mâle (15 ; 115) étant relié audit panneau avant (105),
un connecteur femelle (19 ; 119) ayant une ouverture axiale (21 ; 121) configurée pour recevoir la section d'engagement (17 ; 117) dudit connecteur mâle (15 ; 115), ledit connecteur femelle (19 ; 119) étant connecté à une section pliable (123) dudit panneau arrière (103),
un premier élément de verrouillage magnétique (31 ; 131) qui est reçu dans une cavité de premier élément de verrouillage (39 ; 139) formée dans ledit connecteur femelle (19 ; 119), ladite première cavité d'élément de verrouillage (39), ou une paroi latérale de ladite première cavité d'élément de verrouillage (139), s'étendant dans une direction qui forme un angle (α) avec la direction axiale de ladite ouverture axiale (21 ; 121),
ledit premier élément de verrouillage (31 ; 131) étant mobile dans ladite cavité (39 ; 139) du premier élément de verrouillage entre une position de verrouillage, dans laquelle il est sollicité par un élément élastique (33 ; 133) et dans laquelle il est agencé pour s'engager dans la section d'engagement (17, 51 ; 117, 151) du connecteur mâle (15 ; 115) pour empêcher le connecteur mâle (15 ; 115) de se rétracter hors du connecteur femelle (19 ; 119), et une position non verrouillée dans laquelle il permet à la section d'engagement (17 ; 117) du connecteur mâle (15 ; 115) de se rétracter du connecteur femelle (19 ; 119),
**caractérisé en ce que**
ledit mécanisme de verrouillage (7 ; 107) comprend au moins un autre élément de verrouillage magnétique (131) qui est reçu dans ladite cavité d'élément de premier élément de verrouillage (139) ou dans une autre cavité d'élément de verrouillage formée dans ledit connecteur femelle (19) et s'étendant dans une direction formant un angle avec la direction axiale de ladite ouverture axiale (21 ; 121), chacun desdits panneaux comprenant une couche de blindage électromagnétique (127, 128), dont au moins une s'étend au-delà du panneau avant (105), vu dans une direction allant dudit connecteur mâle (115) vers ledit connecteur femelle (119) lorsque le panneau arrière (103) est situé dans une configuration dépliée, et une section de base (149) dudit connecteur mâle (115) est disposée entre ladite couche de blindage électromagnétique (127) du panneau avant (105) et une couche extérieure (125) du panneau avant (105).

2. Boîtier de dispositif électronique mobile (1 ; 101) selon la revendication 1, dans lequel ledit premier élément de verrouillage magnétique est une bille de verrouillage (31 ; 131).

3. Boîtier de dispositif électronique portable (1 ; 101) selon l'une quelconque des revendications précédentes, dans lequel ledit élément élastique est un ressort de compression (33 ; 133).

4. Boîtier de dispositif électronique portable (1 ; 101) selon l'une quelconque des revendications précédentes, dans lequel ladite section d'engagement est une broche (17 ; 117) et de préférence une broche (17 ; 117) ayant une extrémité externe chanfreinée (53) ou arrondie (153).

5. Boîtier de dispositif électronique portable (101) selon l'une quelconque des revendications précédentes, dans lequel ledit angle (α) est dans la plage de 10 à 70°, plus préférablement de 11 à 60°, et le plus préférablement de 12 à 50°.

6. Boîtier de dispositif électronique portable (101) selon l'une quelconque des revendications précédentes, dans lequel ledit connecteur femelle (19 ; 119) comprend un élément principal (35 ; 135), dans lequel ladite cavité de premier élément de verrouillage (39 ; 139) est formée et dans lequel un évidement (41) destiné à recevoir un élément de fermeture (37 ; 137) est formé.

7. Boîtier de dispositif électronique portable (101) selon l'une quelconque des revendications précédentes, dans lequel ledit boîtier comprend en outre un manchon (45 ; 145) qui est configuré pour connecter ledit connecteur femelle (19 ; 119) à l'un (5 ; 103) des panneaux (103, 105).

8. Boîtier de dispositif électronique portable (101) selon l'une quelconque des revendications précédentes, dans lequel ledit mécanisme de verrouillage (7 ; 107) comprend au moins un autre élément de verrouillage magnétique (131) qui est logé dans ladite cavité (139) de premier élément de verrouillage ou dans une autre cavité d'élément de verrouillage formée dans ledit connecteur femelle (19) et s'étendant dans une direction formant un angle avec la direction axiale de ladite ouverture axiale (21).

9. Boîtier de dispositif électronique portable (101) selon l'une quelconque des revendications précédentes, dans lequel ledit mécanisme de verrouillage (107) comprend trois éléments de verrouillage magnétiques (131), de préférence trois billes de verrouillage magnétiques (131), dont chacun est reçu dans ladite cavité de premier élément de verrouillage (139).

10. Boîtier de dispositif électronique portable (101) selon la revendication 9, dans lequel ledit mécanisme de verrouillage (107) comprend un support d'élément de verrouillage conique (132) présentant au moins deux évidements, de préférence trois évidements, chacun d'eux étant configuré pour recevoir un élément de verrouillage respectif (131).

11. Boîtier de dispositif électronique portable (101) selon la revendication 10, dans lequel ledit support d'élément de verrouillage (132) comporte trois évidements, chacun de ces évidements étant configuré pour retenir un élément de verrouillage respectif (131).

12. Boîtier de dispositif électronique portable (101) selon l'une quelconque des revendications 1 à 8, dans lequel ledit mécanisme de verrouillage (7) comprend trois éléments de verrouillage magnétiques (31), de préférence trois billes de verrouillage magnétiques (31), chacun d'eux étant reçu dans une cavité d'élément de verrouillage respectif (39).
